# FASCICULE DE BREVET EUROPEEN

(11) **EP 1 873 388 B1**
(45) Date de publication et mention de la délivrance du brevet: **14.04.2010**
(21) Numéro de dépôt: 07109795.0
(22) Date de dépôt: 07.06.2007
(51) Int. Cl.: F02K 1/38

(54) **Capot pour tuyère de turbomachine muni de motifs triangulaires à doubles sommets pour réduire le bruit de jet**
Haube eines Strahltriebwerks mit dreieckigen Mitteln mit zwei Scheitelpunkten zur Schalldämpfung
Turbomachine cowl having noise suppression triangular tabs with double crests

(30) Priorité: 26.06.2006 FR 0652644
(43) Date de publication de la demande: 02.01.2008
(73) Titulaire: SNECMA, 75015 Paris (FR)
(72) Inventeur: Au, Dax, 94200, Ivry Sur Seine (FR); Bigot, Pascal, Moïse, Michel, 77950, Moisenay (FR); Briend, Pierre, 37000, Tours (FR); Loheac, Pierre, Philippe, Marie, 77170, Brie Comte Robert (FR)
(74) Mandataire: Boura, Olivier

(56) Documents cités:
- EP-A- 1 496 238
- EP-A- 1 617 068
- FR-A- 2 565 631
- GB-A- 2 104 967

## Description

### Arrière-plan de l'invention

La présente invention se rapporte au domaine général de la réduction de bruit de jet en sortie d'une tuyère de turbomachine. Elle vise plus particulièrement un capot pour tuyère de turbomachine de type à flux séparés qui est muni de motifs pour réduire le bruit de jet.

La pollution sonore est devenue aujourd'hui l'un des sujets de préoccupation pour les motoristes qui sont de plus en plus confrontés à la nuisance acoustique de leurs turbomachines. Les sources de bruit d'une turbomachine sont nombreuses mais il a été constaté que le bruit de jet en sortie de tuyère est le bruit prédominant lors de la phase de décollage d'un avion. Les autorités de certification étant de plus en plus exigeantes face aux émissions acoustiques des turbomachines, des efforts ont été demandés aux motoristes pour réduire le bruit de leurs turbomachines, et notamment le bruit de jet en sortie de tuyère.

Typiquement, une tuyère à flux séparés de turbomachine se compose d'un capot primaire centré sur l'axe longitudinal de la turbomachine, d'un capot secondaire disposé concentriquement autour du capot primaire de façon à définir un premier canal annulaire pour l'écoulement d'un flux externe (ou flux froid), et d'un corps central disposé concentriquement à l'intérieur du capot primaire de façon à définir un second canal annulaire pour l'écoulement d'un flux interne (ou flux chaud), le capot primaire s'étendant au-delà du capot secondaire.

Dans une telle tuyère, le bruit de jet provient des mélanges entre les flux froid et chaud et entre le flux froid et l'air externe contournant la tuyère. Ce bruit est un bruit à large bande de fréquence généré par deux types de source acoustique : un bruit à haute fréquence provenant des petites structures turbulentes du mélange entre les flux chaud et froid et perçu essentiellement près de la tuyère ; et un bruit à basse fréquence provenant des grosses structures tourbillonnaires apparaissant loin du jet.

Pour réduire le bruit de jet, l'un des moyens utilisés est d'augmenter efficacement le mélange entre ces flux. A cet effet, il est bien connu de munir l'un des capots de la tuyère d'une pluralité de motifs répétitifs répartis sur toute la circonférence du bord de fuite du capot. Par la mise en place de tels motifs sur le bord de fuite du capot de la tuyère, le mélange entre les flux s'effectue par la création de tourbillons (ou vortex) près de la tuyère pour mieux dissiper l'énergie cinétique, et par conséquent réduire l'intensité turbulente des gros tourbillons constituant les sources de bruit majeures.

Par exemple, le brevet US 6,532,729 prévoit de munir le bord de fuite des capots primaire et secondaire de la tuyère d'une pluralité de motifs répétitifs de forme triangulaire (appelés chevrons) qui permettent de favoriser le mésange entre les flux chaud et froid. De même, la publication US 2002/0164549-A1 propose de munir le bord de fuite des capots primaire et secondaire de la tuyère d'une pluralité de motifs répétitifs de forme trapézoïdale (appelés créneaux). Enfin, le document GB 2,104,967 décrit un capot selon le préambule de la revendication 1.

Bien que favorisant le mélange entre les flux, les motifs évoqués ci-dessus ne sont pas entièrement satisfaisants. En effet, même si de tels motifs permettent due diminuer la composante à basse fréquence du bruit de jet, cela est généralement réalisé au détriment de sa composante à haute fréquence qui reste à une niveau trop élevé.

### Objet et résumé de l'invention

La présente invention a donc pour but principal de pallier de tels inconvénients en proposant une forme géométrique de motifs à réduction de bruit de jet pour capot de tuyère de turbomachine permettant de diminuer à la fois les composantes à basse et haute fréquence du bruit de jet.

Ce but est atteint grâce à un capot annulaire pour tuyère de turbomachine, comportant une pluralité de motifs disposés dans le prolongement d'un bord de fuite du capot et espacés circonférentiellement les uns des autres, chaque motif ayant un contour de forme sensiblement triangulaire avec une base formée par une partie du bord de fuite du capot et deux sommets espacés vers l'aval de la base et raccordés chacun à celle-ci par un côté, et dans lequel, conformément à l'invention, pour chaque motif, les sommets présentent un contour sensiblement courbe et sont reliés entre eux par une portion sensiblement courbe à rayon de courbure supérieure à ceux du contour des sommets, chaque côté se raccorde au bord de fuite du capot selon un contour sensiblement courbe à rayon de courbure supérieur à ceux du contour des sommets et supérieur à celui du contour de la portion courbe reliant lesdits sommets, et les sommets et la portion courbe les reliant sont inclinés radialement vers l'intérieur du capot par rapport au bord de fuite de celui-ci avec la portion courbe reliant lesdits sommets qui est décalée radialement vers l'extérieur par rapport aux sommets.

Cette géométrie particulière des motifs à réduction de bruit reprend le principe des mélangeurs utilisés dans les tuyères de turbomachine à flux mélangés. En effet, la présence de la portion courbe qui relie les deux sommets du motif entre eux et qui a une inclinaison radiale moins importante que celles des sommets permet d'obtenir un croisement localisé entre les flux chaud et froid, et par conséquent une accélération de leur mélange. Il résulte de ce meilleur mélange entre les flux une diminution du bruit de jet dans les basses et hautes fréquences.

Selon une disposition avantageuse, les sommets de chaque motif sont situés à des hauteurs par rapport à la base sensiblement égales.

Selon une autre disposition avantageuse, au moins l'un des motifs présente une symétrie par rapport à un plan médian au motif et passant par l'axe de révolution du capot.

L'invention a également pour objet une tuyère de turbomachine dont le capot primaire et/ou le capot secondaire est un capot tel que défini précédemment.

L'invention a encore pour objet une turbomachine comportant au moins un capot tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique en perspective d'une tuyère de turbomachine équipée d'un capot selon un mode de réalisation de l'invention ;
- la figure 2 est une vue élargie d'un motif à réduction de bruit de jet du capot de la figure 1 ;
- les figures 3 et 4 sont des vues du motif de la figure 2, respectivement de face et de profil ; et
- la figure 5 est un graphique montrant des courbes comparatives de bruit engendré par des tuyères à flux séparés.

### Description détaillée d'un mode de réalisation

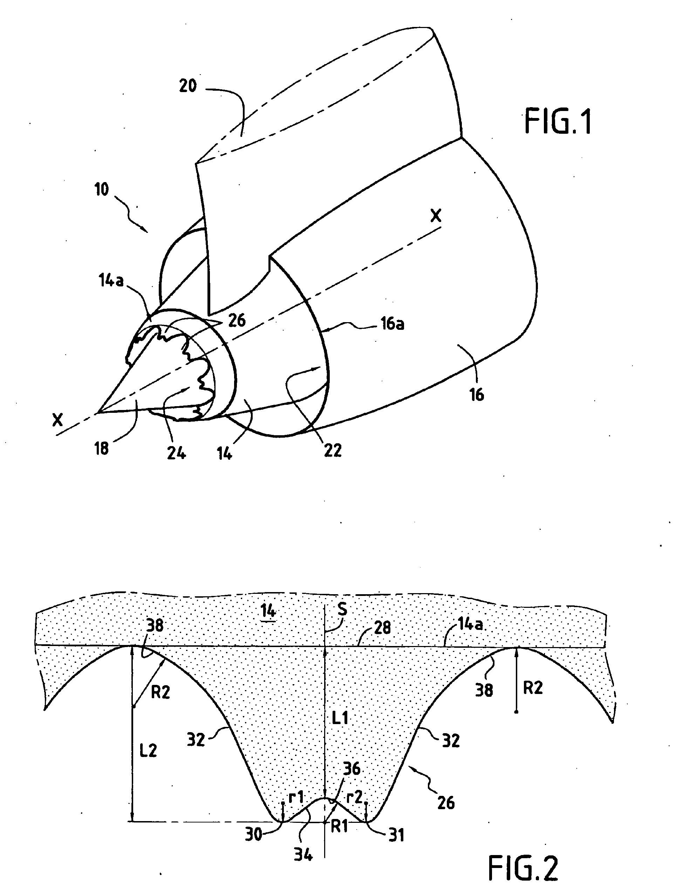

La figure 1 représente, de façon très schématique et en perspective, une tuyère 10 à flux séparés de turbomachine.

La tuyère 10, de forme axisymétrique par rapport à son axe longitudinal X-X, est typiquement formée d'un capot primaire 14, d'un capot secondaire 16 et d'un corps central 18 qui sont centrés sur l'axe longitudinal X-X de la tuyère.

Le capot primaire 14, de forme sensiblement cylindrique ou tronconique, s'étend selon l'axe longitudinal X-X de la tuyère. Le corps central 18 est disposé concentriquement à l'intérieur du capot primaire 14 et se termine par une partie sensiblement conique.

Le capot secondaire 16, également de forme sensiblement cylindrique ou tronconique, entoure le capot primaire 14 tout en lui étant concentrique et s'étend également selon l'axe longitudinal X-X de la tuyère. Le capot primaire 14 s'étend longitudinalement vers l'aval au-delà du capot secondaire 16.

On notera que, sur l'exemple de réalisation de la figure 1, le corps central 18 de la tuyère 10 est de type externe, c'est à dire que le corps central 18 s'étend longitudinalement au-delà du bord de fuite 14a du capot primaire 14.

Toutefois, l'invention peut également s'appliquer à une tuyère à flux séparés de type interne dans laquelle le bord de fuite du capot primaire s'étend longitudinalement au-delà du corps central de façon à recouvrir complètement ce dernier. De même, l'invention peut aussi s'appliquer à une tuyère dite à flux mélangés dans laquelle le bord de fuite du capot secondaire s'étend longitudinalement au-delà de celui du capot primaire.

La tuyère à flux séparés ainsi définie est fixée sous une aile d'avion (non représentée sur les figures) par l'intermédiaire d'un pylône de support 20 s'appuyant sur le capot secondaire 16 de la tuyère et se prolongeant à l'intérieur du capot secondaire jusqu'au capot primaire 14.

L'assemblage concentrique des éléments de la tuyère 10 permet de définir, d'une part entre les capots primaire 14 et secondaire 16, un premier canal annulaire 22 pour l'écoulement de l'air issu de la turbomachine et appelé flux secondaire ou flux froid, et d'autre part, entre le capot primaire 14 et le corps central 18, un second canal annulaire 24 pour l'écoulement d'un flux gazeux interne issu de la turbomachine et appelé aussi flux primaire ou flux chaud.

Les flux primaire et secondaire s'écoulant dans ces deux canaux annulaires 22, 24 se mélangent entre eux au niveau d'un bord de fuite 14a du capot primaire 14. De même, le flux secondaire se mélange à un flux d'air externe contournant la tuyère au niveau d'un bord de fuite 16a du capot secondaire 16.

Au moins l'un des deux capots 14, 16 de la tuyère 10 comporte une pluralité de motifs 26 répétitifs qui sont destinés à réduire le bruit de jet en sortie de la tuyère.

Sur l'exemple de réalisation de la figure 1, les motifs 26 à réduction de bruit de jet sont disposés sur le capot primaire 14. Cependant, ils pourraient tout aussi bien être disposés seulement sur le capot secondaire 16 ou bien à la fois sur le capot primaire et le capot secondaire de la tuyère.

Les motifs 26 à réduction de bruit de jet sont disposés dans le prolongement du bord de fuite 14a du capot primaire 14 et sont régulièrement espacés les uns des autres dans le sens circonférentiel.

Comme représenté plus en détails sur la figure 2, chaque motif 26 présente un contour de forme générale sensiblement triangulaire avec une base 28 formée par une partie du bord de fuite 14a du capot 14, et deux sommets (ou bosses) 30, 31 espacés vers l'aval par rapport à la base 28 et raccordés chacun à celle-ci par un côté 32 à profil parabolique.

Le motif 26 présente donc une forme générale de triangle dans lequel on aurait pratiqué une découpe sensiblement triangulaire au niveau de son extrémité aval.

En outre, chaque motif 26 à réduction de bruit selon l'invention présente un certain nombre de caractéristiques géométriques. En particulier, les sommets 30, 31 du motif 26 présentent chacun un contour sensiblement courbe à rayons de courbure respectifs r1, r2. Ils sont reliés entre eux par une portion 34 sensiblement courbe à rayon de courbure R1 supérieure à ceux r1, r2 du contour des sommets 30, 31.

On notera que la courbure de la portion 34 reliant les sommets 30, 31 du motif est inverse par rapport à celle desdits sommets. Ainsi, la portion courbe 34 présente un point bas 36 correspondant au point de la portion courbe qui est le plus proche de la base 28 du motif (le point bas 36 se situe à une distance L1 de la base 28 qui est inférieure à celle L2 à laquelle sont situés les sommets). A titre d'exemple, le rapport L1/L2 peut être compris entre 9/10 et 1/2.

Les sommets 30, 31 sont donc les points du profil géométrique du motif 26 qui sont le plus en aval par rapport à la base 28 de celui-ci, le point bas 36 les reliant étant situé longitudinalement entre ladite base et lesdits sommets.

Toujours selon l'invention, chaque côté 32 du motif 26 se raccorde au bord de fuite 14a du capot 14 selon un contour sensiblement courbe à rayon de courbure R2 supérieur à ceux r1, r2 du contour des sommets 30, 31 et supérieur à celui R1 du contour de la portion courbe 34 reliant lesdits sommets (R2 > R1 > r1, r2).

Sur l'exemple de réalisation de la figure 2, la référence 38 désigne le raccord courbé entre chaque côté 32 du motif 26 et le bord de fuite 14a du capot 14. On notera que les profils de ces raccords 38 sont continus avec ceux des raccords entre les motifs adjacents et le bord de fuite du capot.

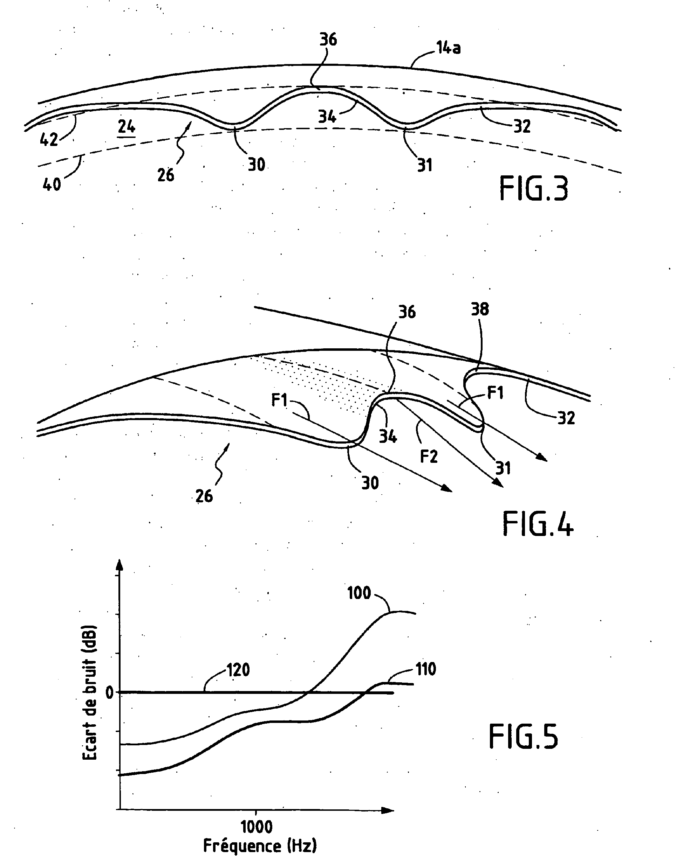

En outre, comme représenté sur la figure 3, les sommets 30, 31 du motif 26 selon l'invention et la portion courbe 34 les reliant sont inclinés radialement vers l'intérieur du capot 14 par rapport au bord de fuite 14a de celui-ci, avec la portion courbe 34 qui est décalée radialement vers l'extérieur par rapport aux sommets.

En d'autres termes, le motif 26 pénètre radialement dans le canal annulaire 24 d'écoulement du flux chaud avec une pénétration plus importante au niveau de ses deux sommets 30, 31 qu'au niveau du point bas 36 de la portion courbe 34 les reliant.

Ainsi, les sommets 30, 31 du motif sont situés sensiblement sur une même ligne circulaire 40 qui est concentrique à la ligne appelée « apex » symbolisant le bord de fuite 14a du capot et qui possède un diamètre inférieur à celui de l'apex. Quant au point bas 36 de la portion courbe 34 reliant les sommets, il est situé sur une ligne circulaire 42 qui est également concentrique à l'apex et qui possède un diamètre inférieur à celui-ci mais supérieur à celui de la ligne 40 passant par les sommets.

Par ailleurs, on notera que l'inclinaison radiale globale du motif 26 est de préférence limitée de façon à ce que le motif se situe à l'intérieur d'une couche limite générée par l'écoulement des flux gazeux autour du profil du capot 14.

Comme représenté de façon schématique sur la figure 4, un tel profil de motif à réduction de bruit permet de faire converger vers le centre du motif les flux gazeux F1 externe au motif générés au niveau des sommets 30, 31 de celui-ci de façon à confiner le flux gazeux F2 interne au motif et sortant au niveau de la portion courbe 34 reliant lesdits sommets. En outre, étant donné qu'il existe un décalage radial entre les sommets 30, 31 du motif et la portion courbe 34 reliant ces derniers, les flux externe F1 se croisent avec le flux interne F2 en aval du motif. Le mélange entre les flux interne et externe est donc augmenté.

Selon une caractéristique avantageuse de l'invention représentée sur la figure 2, les sommets 30, 31 de chaque motif 26 sont situés à des hauteurs L2 par rapport à la base 28 qui sont sensiblement égales entre elles.

Selon une autre caractéristique avantageuse de l'invention également représentée sur la figure 2, la forme des motifs 26 présente une symétrie par rapport à un plan S médian audit motif et passant par l'axe longitudinal du capot. Il résulte d'une telle symétrie que le point bas 36 de la portion courbe 34 reliant les sommets 30, 31 du motif est situé dans le plan S de symétrie, que les rayons de courbure r1, r2 des sommets 30, 31 sont égaux et que les côtés 32 du motif ont le même profil parabolique.

Des simulations numériques du niveau de bruit engendré par une tuyère à flux séparés dont le capot primaire est équipé de motifs à réduction de bruit selon l'invention ont été réalisées. Les résultats de ces simulations sont représentés dans le graphique comparatif de la figure 5.

Le graphique de cette figure illustre, sous forme de courbes, les écarts de bruit en décibels en fonction de la fréquence pour une tuyère dont le capot primaire est muni de motifs à réduction de bruit ayant une forme simplement triangulaire (courbe 100) et pour une tuyère dont le capot primaire est muni de motifs à réduction de bruit selon l'invention (courbe 110). Les écarts de bruit sont calculés par rapport à une courbe 120 correspondant au bruit engendré par une tuyère à flux séparés dont le capot primaire est dépourvu de motifs à réduction de bruit.

De ce graphique, on constate que l'utilisation de motifs à réduction de bruit selon l'invention permet de diminuer le bruit à basse fréquence (inférieur à 1000 Hz environ), non seulement par rapport à une tuyère dépourvue de motifs (courbe 120) mais également par rapport à une tuyère dont le capot primaire est équipé de motifs simplement triangulaires (courbe 100). La géométrie particulière des motifs selon l'invention a pour autre avantage de limiter l'augmentation de la composante à haute fréquence du bruit (supérieure à 1000 Hz environ) par rapport aux motifs simplement triangulaires. En particulier, on constate que la forme particulière des motifs selon l'invention permet de générer un bruit à haute fréquence qui est voisin de celui généré par une tuyère dont le capot primaire est dépourvu de motifs à réduction de bruit.

## Revendications

1. Capot annulaire (14, 16) pour tuyère (10) de turbomachine, comportant une pluralité de motifs (26) disposés dans le prolongement d'un bord de fuite (14a, 16a) dudit capot et espacés circonférentiellement les uns des autres, chaque motif (26) ayant un contour de forme sensiblement triangulaire avec une base (28) formée par une partie du bord de fuite du capot et deux sommets (30, 31) espacés vers l'aval de la base et raccordés chacun à celle-ci par un côté (32), **caractérisé en ce que**, pour chaque motif (26) :
- les sommets (30, 31) présentent chacun un contour sensiblement courbe et sont reliés entre eux par une portion (34) sensiblement courbe à rayon de courbure (R1) supérieure à ceux (r1, r2) du contour desdits sommets ;
- chaque côté (32) se raccorde au bord de fuite (14a, 16a) du capot (14, 16) selon un contour sensiblement courbe à rayon de courbure (R2) supérieur à ceux (r1, r2) du contour des sommets (30, 31) et supérieur à celui (R1) du contour de la portion courbe (34) reliant lesdits sommets ; et
- les sommets (30, 31) et la portion courbe (34) les reliant sont inclinés radialement vers l'intérieur du capot (14, 16) par rapport au bord de fuite (14a, 16a) de celui-ci avec là portion courbe reliant lesdits sommets qui est décalée radialement vers l'extérieur par rapport aux sommets.

2. Capot selon la revendication 1, dans lequel les sommets (30, 31) de chaque motif (26) sont situés à des hauteurs (L2) par rapport à la base (28) qui sont sensiblement égales.

3. Capot selon l'une des revendications 1 et 2, dans lequel au moins l'un des motifs (26) présente une symétrie par rapport à un plan (S) médian au motif et passant par l'axe de révolution (X-X) du capot (14).

4. Tuyère (10) de turbomachine, comportant un capot primaire (14) disposé selon un axe longitudinal (X-X) de la tuyère et un capot secondaire (16) disposé concentriquement autour du capot primaire (14),
**caractérisée en ce que** le capot primaire (14) et/ou le capot secondaire (16) est un capot selon l'une quelconque des revendications 1 à 3.

5. Turbomachine comportant une tuyère (10) ayant au moins un capot (14, 16) selon l'une quelconque des revendications 1 à 3.

## Claims

1. An annular cowl (14, 16) for a turbomachine nozzle (10), the cowl having a plurality of patterns (26) extending the trailing edge (14a, 16a) of said cowl and spaced apart circumferentially from one another, each pattern (26) having an outline of substantially triangular shape with a base (28) formed by a portion of the trailing edge of the cowl and with two vertices (30, 31) spaced downstream from the base and each connected thereto by a side (32), **characterized in that** for each pattern (26):
· each vertex (30, 31) presents a substantially curved outline and the vertices are interconnected by a substantially curved portion (34) having a radius of curvature (R1) greater than the radii of curvature (r1, r2) of the outlines of said vertices;
· each side (32) is connected to the trailing edge (14a, 16a) of the cowl (14, 16) via an outline that is substantially curved having a radius of curvature (R2) greater than the radii of curvature (r1, r2) of the outlines of the vertices and greater than the radius of the outline of the curved portion (34) interconnecting said vertices; and
· the vertices (30, 31) and the curved portion (34) interconnecting them are inclined radially towards the inside of the cowl (14, 16) relative to the trailing edge (14a, 16a) thereof with the curved portion interconnecting said vertices being offset radially outwards relative to the vertices.

2. A cowl according to claim 1, in which the vertices (30, 31) of each pattern (26) are situated at heights (L2) from the base (28) that are substantially equal.

3. A cowl according to claim 1 or 2, in which at least one of the patterns (26) presents symmetry about a midplane (S) of the pattern containing the axis of symmetry (X-X) of the cowl (14).

4. A turbomachine nozzle (10) having a primary cowl (14) disposed about a longitudinal axis (X-X) of the nozzle and a secondary cowl (16) disposed coaxially around the primary cowl (14), **characterized in that** the primary cowl (14) and/or the secondary cowl (16) is/are a cowl according to any one of claims 1 to 3.

5. A turbomachine including a nozzle having at least one cowl (14, 16) according to any one of claims 1 to 3.

## Patentansprüche

1. Ringförmige Verkleidung (14, 16) für eine Düse (10) einer Turbomaschine, mit einer Vielzahl von Mustern (26), die in der Verlängerung einer Austrittskante (14a, 16a) der Verkleidung angeordnet und in Umfangsrichtung voneinander beabstandet sind, wobei jedes Muster (26) eine im wesentlichen dreieckförmige Kontur aufweist, mit einer von einem Teil der Austrittskante der Verkleidung gebildeten Basis (28) und mit zwei Spitzen (30, 31), die stromabwärts von der Basis beabstandet und mit dieser jeweils über eine Seite (32) verbunden sind, **dadurch gekennzeichnet, daß** bei jedem Muster (26):
- die Spitzen (30, 31) jeweils eine im wesentlichen gebogene Kontur aufweisen und durch einen im wesentlichen gebogenen Abschnitt (34), dessen Krümmungsradius (R1) größer als diejenigen (r1, r2) der Kontur der Spitzen ist, untereinander verbunden sind,
- jede Seite (32) sich entlang einer im wesentlichen gebogenen Kontur, deren Krümmungsradius (R2) größer als diejenigen (r1, r2) der Kontur der Spitzen (30, 31) und größer als derjenige (R1) der Kontur des die Spitzen verbindenden gebogenen Abschnitts (34) ist, an die Austrittskante (14a, 16a) der Verkleidung (14, 16) anschließt, und
- die Spitzen (30, 31) sowie der sie verbindende gebogene Abschnitt (34) gegenüber der Austrittskante (14a, 16a) der Verkleidung (14, 16) radial zu deren Innenseite geneigt sind, wobei der die Spitzen verbindende gebogene Abschnitt gegenüber den Spitzen radial nach außen versetzt ist.

2. Verkleidung nach Anspruch 1, wobei die Spitzen (30, 31) eines jeden Musters (26) bezogen auf die Basis (28) in im wesentlichen gleichen Höhen (L2) gelegen sind.

3. Verkleidung nach einem der Ansprüche 1 und 2, wobei wenigstens eines der Muster (26) gegenüber einer in der Mitte des Musters gelegenen und durch die Rotationsachse (X-X) der Verkleidung (14) verlaufenden Ebene (S) eine Symmetrie aufweist.

4. Düse (10) einer Turbomaschine, die eine Primärverkleidung (14), welche entlang einer Längsachse (X-X) der Düse angeordnet ist, und eine Sekundärverkleidung (16), welche konzentrisch um die Primärverkleidung (14) angeordnet ist, aufweist, **dadurch gekennzeichnet, daß** die Primärverkleidung (14) und/oder die Sekundärverkleidung (16) eine Verkleidung nach einem der Ansprüche 1 bis 3 ist.

5. Turbomaschine, die eine Düse (10) mit wenigstens einer Verkleidung (14, 16) nach einem der Ansprüche 1 bis 3 umfaßt.
